# DEMANDE DE BREVET EUROPEEN

(11) **EP 2 390 825 A1**
(43) Date de publication de la demande: **30.11.2011**
(21) Numéro de dépôt: 10305573.7
(22) Date de dépôt: 31.05.2010
(51) Int. Cl.: G06K 19/077

(54) **Procédé de réalisation d'un dispositif comportant une antenne de transpondeur sur une âme fine et dispositif obtenu**

(71) Demandeur: Gemalto SA, 92190 Meudon (FR)
(72) Inventeur: BOUSQUET, Christophe, 83500, LA SEYNE SUR MER (FR); MARTINENT, Jean-François, 13600, LA CIOTAT (FR); ROBLES, Laurence, 83640, SAINT ZACHARIE (FR); ROUSSEL, François, 13830, ROQUEFORT LA BEDOULE (FR)

(57) **Abrégé**

L'invention concerne un procédé de réalisation d'un dispositif comportant une antenne de transpondeur, ledit procédé comportant des étapes de :
- réalisation d'un ensemble comprenant un substrat fin (2) portant au moins une antenne (3), l'antenne comportant des portions terminales (7b, 8b) de connexion reposant sur le substrat à des emplacements du substrat; Le procédé se distingue en ce que le substrat constitue ou comprend une masse adhésive en feuille ou ruban au contact de l'antenne.

L'invention concerne également le dispositif obtenu.

## Description

L'invention concerne le domaine des transpondeurs radiofréquences. En particulier, il concerne un procédé de réalisation d'un dispositif comportant une antenne de transpondeur connectée à des plages de contact et le dispositif obtenu.

Le procédé ci-dessus, comporte en particulier, une étape de connexion de l'antenne à des plages de contact, ces dernières étant destinées à être connectées à un microcircuit, tel une puce électronique ou un module.

L'invention vise à être utilisée principalement dans la fabrication d'un insert électronique radiofréquence de faible épaisseur, bas coût et présentant de préférence de bonnes propriétés de communication notamment de portée.

Un tel insert comporte au moins une antenne sur un substrat connectée à un microcircuit; il est destiné notamment à être inséré dans un laminé de feuilles, une couverture de passeport électronique, une carte d'identité, tout produit doté d'une fonction de communication radiofréquence; et de fait, son épaisseur présente de l'importance.

Dans d'autres cas comme dans le brevet EP 0880 754, le fil d'antenne réalisé en fil incrusté dans une feuille polymère, survole des plages de contact d'une puce déjà en place ou son emplacement correspondant préalablement à une connexion par soudure notamment à ultrasons ou thermo compression directement en appuyant et apportant de l'énergie sur le fil.

On connaît la demande de Brevet US 7 059 535 dans laquelle, une antenne est réalisée sur un substrat fin par rapport à des feuilles de recouvrement tandis qu'un module est sur ce substrat. Les extrémités d'antenne survolent les plages de contact d'un module puis sont connectées par thermo compression. Une feuille de recouvrement inférieure comprenant une cavité est placée sous le substrat de manière à recevoir une partie du module et du substrat dans la cavité au cours d'une lamination avec une autre feuille de recouvrement supérieure placée au dessus du substrat. Le substrat se déforme sous le module, bouche la cavité et nivelle la face externe de la feuille de recouvrement inférieure.

Ce procédé a l'inconvénient d'être peu commode pour le placement du module dans la cavité et la finesse du produit final n'est pas optimale.

On connait la demande de brevet EP-2001077 (A1) décrivant une connexion d'un module à l'aveugle à l'aide d'un système à enclumes fines et sondes de soudure, le module étant reporté dans une cavité d'un support d'antenne. Pour la connexion, des enclumes traversent le support d'antenne étant composé d'un substrat d'antenne textile et d'un matériau de renfort sous le substrat d'antenne. L'opération de soudure met en oeuvre une enclume (E) qui vient exercer un appui contre l'enfoncement d'une portion terminale de l'antenne dans le substrat. L'enclume transperce d'un trou le support en regard de la portion terminale à connecter de manière que la portion à connecter soit supportée par l'enclume pendant la soudure.

Les perforations réalisées par les enclumes fines dans le matériau de renfort peuvent créer des irrégularités de surface visibles sur le produit fini selon les applications envisagées notamment quand ce matériau de renfort constitue une couverture de passeport.

L'invention vise à résoudre les inconvénients précités.

Le principe de l'invention consiste à réaliser l'antenne sur substrat fin constituant au moins en grande partie une masse adhésive en feuille ou en ruban qui va être utilisé à assembler des feuilles de recouvrement. Un module électronique est également reporté et connecté sur ce substrat; Ainsi, les marques éventuelles résultant du report et/ou de la connexion du module sont invisibles après ajout des feuilles de recouvrement. Le matériau du substrat fin est de préférence choisi avec des propriétés qui lui permettent de se désagréger en cas de manipulation frauduleuse telle une substitution des feuilles de couverture.

A cet effet, l'invention a pour objet un procédé de réalisation d'un dispositif comportant une antenne de transpondeur, ledit procédé comportant des étapes de :
- réalisation d'un ensemble comprenant un substrat fin portant au moins une antenne (3), l'antenne comportant des portions terminales (7b, 8b) de connexion reposant sur le substrat à des emplacements du substrat
caractérisé en ce que le substrat constitue ou comporte une masse adhésive en feuille ou en ruban au contact de l'antenne.

Selon une caractéristique, l'épaisseur de la feuille ou ruban est inférieure à 90 µm.

L'invention a également pour objet le dispositif résultant du procédé et un produit électronique de communication radiofréquence, tel une carte à puce sans contact, un passeport comprenant ce dispositif.

Selon d'autres caractéristiques de l'invention
- au moins une feuille ou couche de couverture recouvre l'une ou les deux faces opposées du substrat;
- l'une au moins des feuilles ou couche de couverture comporte une ouverture de compensation d'épaisseur du microcircuit.
- le fil d'antenne et ses portions terminales de connexion sont noyés au moins en partie dans le substrat adhésif âme entre deux feuilles de recouvrement.
- le matériau adhésif présente des propriétés de tenue mécanique suffisamment faible pour se décomposer en cas de tentative de délamination / arrachement des feuilles de recouvrement pour les substituer à d'autres feuilles non authentiques.

Dans ce cas, l'antenne peut se déformer et se désaccorder ajoutant ainsi un aspect de sécurité au dispositif.

D'autres particularités et avantages de l'invention apparaîtront à la lecture de la description, qui suit, donnée à titre d'exemple illustratif et non limitatif, et faite en référence aux figures annexées pour lesquelles :
- la figure 1 illustre une vue schématique partielle d'un dispositif de l'invention en cours en fabrication et pouvant être obtenu selon un mode de mise en oeuvre du procédé de l'invention;
- la figure 2 illustre une vue en coupe selon A-A de la figure 1;
- la figure 3 illustre une vue schématique d'un transpondeur pouvant être obtenu selon un mode de mise en oeuvre du procédé de l'invention ;
- la figure 3A illustre une vue en coupe d'un dispositif selon la coupe B-B de la figure 3;
- la figure 4 illustre une vue en coupe d'un dispositif selon une coupe similaire à la précédente mais avec des feuilles de compensation d'épaisseur de module comprend des ouvertures de réception d'une partie du module;
- La figure 5 illustre des étapes d'un procédé selon un mode préféré de mise en oeuvre de l'invention.

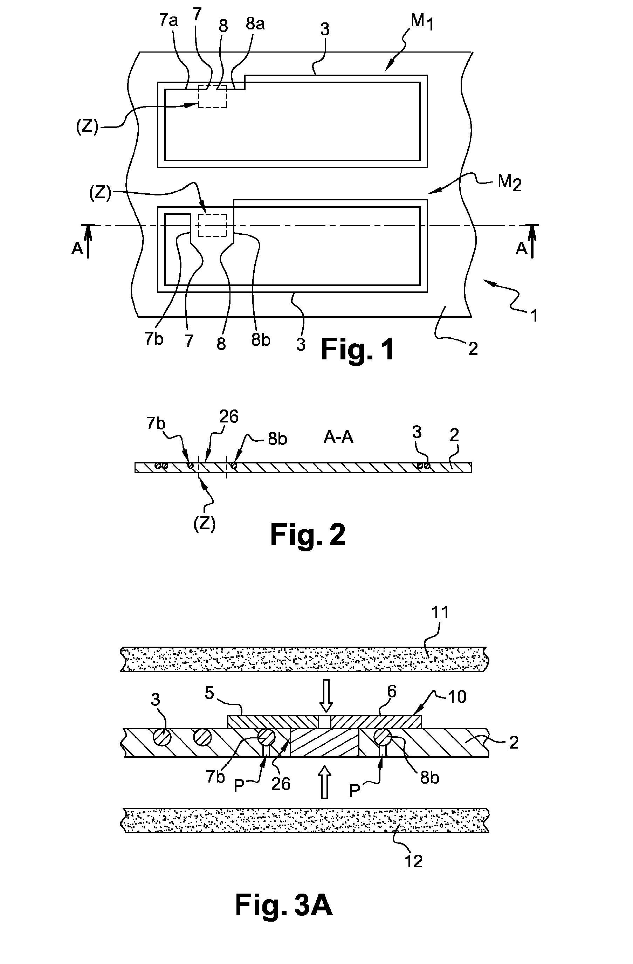

La figure 1 illustre une vue schématique d'un dispositif 1 comprenant un substrat 2 portant au moins une antenne 3, l'antenne comportant des portions terminales 7a, 7b ou 8a,8b de connexion reposant sur le substrat à des emplacements du substrat.

Dans l'exemple, le substrat est une bande continue ou une feuille comportant une pluralité d'antennes formée par incrustation de fil conducteur dans la matière du substrat.

Selon l'invention, le substrat est constitué d'une masse adhésive en feuille ou ruban. Dans l'application carte à puce, passeport, insert l'épaisseur de l'adhésif est de préférence inférieure à 100 µm, voire 90 µm. Plus exactement, on préfère une épaisseur comprise entre 60 et 80 µm; Dans d'autres variantes d'utilisation, l'épaisseur est supérieure à 100 µm, par exemple, 150 ou 200 µm.

Il peut être plus pratique selon la nature de l'adhésif de recourir à un film support de ce dernier, d'une épaisseur inférieure ou égale à 80 µm pour faciliter la manipulation. Ce film support est retiré ultérieurement après l'étape de réalisation de la cavité comme indiqué infra. Ainsi la masse adhésive est au contact et supporte l'antenne.

Le matériau adhésif est par exemple un thermoadhésif PU fourni par la société « BayerEpurex » D'autre matériaux conviennent tels que par exemple adhésif base polyéthylène (type EVA).

Définition de masse adhésive selon un mode de mise en ouvre préféré :
L'adhésif est notamment un thermofusible, sans exclure pour autant des thermodurcissables ; Il peut comporter des molécules présentant des groupes polaires pour offrir par leur intermédiaire une bonne adhésion avec différents matériaux. Une accroche mécanique notamment dans des pores d'une feuille de couverture n'est pas nécessaire pour assurer l'adhésion contrairement au brevet US 7059535.
L'adhésif comprend notamment les matériaux de type colle thermofusible (hot melt).

De préférence, l'adhésif sélectionné a une température de ramollissement d'environ 90 à 110°C. Cette température correspond à la température de mise en oeuvre ou d'activation de l'adhésif pour la lamination avec des feuilles de couvertures.

L'adhésif a une température de ramollissement nettement inférieure à celle des feuilles de couverture qui est par exemple supérieure à 160 °C.

Selon une caractéristique, le matériau adhésif présente des propriétés de tenue mécanique suffisamment faible pour se décomposer / déchirer en cas de tentative de délamination des feuilles de recouvrement. Le fil d'antenne est de préférence noyé totalement ou partiellement dans la masse adhésive.

Le substrat ainsi manipulé par fraude perd son intégrité et sa stabilité dimensionnelle et par voie de conséquence fait perdre également la stabilité dimensionnelle de l'antenne qui se désaccorde.

Les propriétés du matériau sont choisies de manière à ce qu'il ait une tenue suffisante pour être manipulé et supporter une antenne notamment lors d'une étape d'incrustation d'antenne (avec ou sans film support détachable, l'antenne étant reportée au contact de la matière adhésive).

De préférence, le matériau est apte à se décomposer en cas d'une délamination frauduleuse de feuilles de recouvrement collées ensembles via le substrat et ne constitue plus un support stable à l'antenne. La masse adhésive présente de préférence des propriétés de tenue mécanique et/ou chimique suffisamment faibles pour se décomposer ou se déchirer en cas de tentative de délamination des feuilles de recouvrement notamment par attaque chimique. L'attaque peut consister à délaminer notamment à l'aide d'un solvant.

Selon une caractéristique, le dispositif comprend une cavité 26 à proximité des portions terminales de connexion 7b, 8b. Dans l'exemple (fig.1) dans le motif d'antenne M1, les points de départ 7 et d'arrêt 8 de l'antenne sont disposés dans une zone d'emplacement d'un module électronique ou une zone Z destinée à être découpée par la suite.

Au contraire, dans le motif d'antenne M2 de la figure 1, les points de départ 7 et d'arrêt 8 de l'antenne sont disposés hors de la zone Z mais cependant à proximité de l'emplacement d'une cavité et/ou du module.

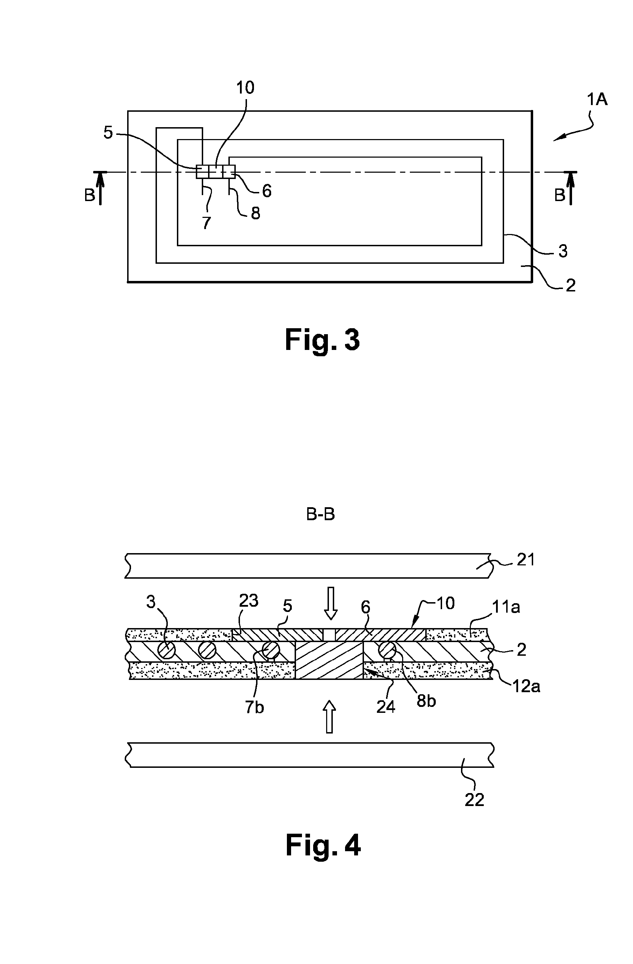

Selon une caractéristique, le dispositif 1A (fig. 3A) dans une étape de fabrication plus avancée qu'à la figure 1, comprend un module électronique 10 disposé au moins en partie dans la cavité: Le module comporte des plages de contact 5, 6 connectées respectivement aux portions terminales 7b, 8b de l'antenne qui leur sont disposées directement en regard.

Le module peut constituer un composant ou puce de circuit intégré et les plages de contacts peuvent constituer les plots de contacts de cette puce ou du composant. Alternativement, le composant peut être déposé par "flip-chip" sur les portions terminales de connexion.

Le dispositif comprend de préférence au moins une feuille ou couche de couverture 11, 12 recouvrant l'une ou les deux faces opposées du substrat. Selon une caractéristique, au moins une feuille ou couche de couverture comporte une ouverture de compensation d'épaisseur du microcircuit. Dans l'exemple, de la figure 4, les deux feuilles ou couches 11a, 12a comprennent respectivement une cavité pour les plages de contact 5, 6 et pour un enrobage 24 de puce de circuit intégré du module.

Aux figures 3, 3A le fil d'antenne 3 et ses portions terminales de connexion 7b, 8b sont noyés au moins en partie dans le substrat adhésif âme 2.

Les portions terminales sont connectées aux plages de contact au niveau de l'interface formée par les plages de contact du module et le substrat. Sous les portions 7b et 8b, se trouve une perforation P débouchant en surface inférieure du substrat et qui témoigne d'une connexion à l'aide d'une enclume fine (ou aiguille support).

A la figure 4, le fil d'antenne 3 et ses portions terminales de connexion 7b, 8b sont noyés au moins en partie dans le substrat adhésif âme entre deux feuilles de recouvrement 11a, 12a. Les portions terminales de connexion de l'antenne sont quant à elles prises en sandwich entre une feuille de recouvrement 12a et une plage de contact 5, 6 du module.

L'une au moins des feuilles ou couche de couverture 21, 22 comporte une ouverture 23, 24 permettant de compenser une partie de l'épaisseur du module.

L'invention à ainsi un avantage d'éviter une épaisseur du fil conducteur vers l'extérieur comme dans la demande de brevet US 7 059 535-B2 lorsque le fil est connecté après avoir survolé une plage de contact d'un module.

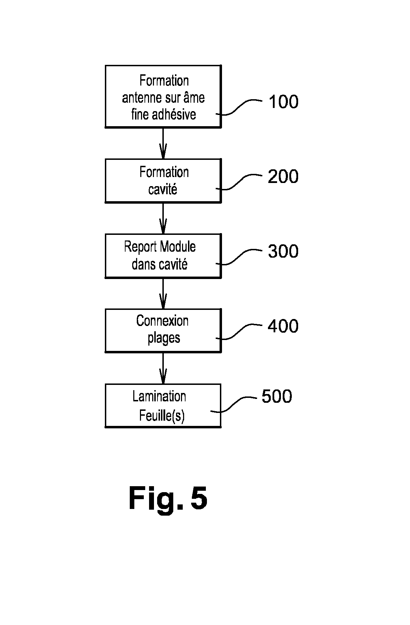

En référence à la figure 5, sera décrit maintenant un mode de mise en oeuvre préféré du procédé de l'invention.

A l'étape 100, le procédé de réalisation d'un dispositif comportant une antenne de transpondeur, comporte une étape de formation d'au moins une antenne;

On réalise donc un ensemble comprenant un substrat 2 portant au moins une antenne 3 et des portions terminales 7b, 8b ou 7a, 8a de connexion reposant sur le substrat à des emplacements du substrat. Dans d'autres variantes de mise en oeuvre de l'antenne, les portions de fils destinées à recevoir les connexions à un microcircuit peuvent ne pas reposer sur le substrat. Cela peut être le cas notamment où la portion s'étend sur une cavité déjà formée dans le substrat où un microcircuit déjà en place.

Dans l'exemple on utilise un ruban continu fourni en bobine avec une ou plusieurs rangées d'antenne 3 toutes ayant le même motif ou non (fig. 1). Le ruban a une épaisseur égale à 80 µm.

Chaque antenne est réalisée de préférence par incrustation de fil conducteur sur le substrat. Le fil d'antenne conducteur peut comporter au moins un revêtement isolant sur toute sa surface. L'antenne a une forme plane spiralée avec des spires espacées.

Cependant d'autres techniques notamment filaires ne sont pas exclues; l'invention prévoit notamment d'effectuer un dépôt d'un fil conducteur chauffé afin d'adhérer au substrat ou une gravure d'un ruban conducteur préalablement fixé au ruban adhésif.

A l'étape suivante 200, le procédé comprend une étape de formation d'une cavité à proximité des portions terminales de connexion comme déjà expliqué avec la figure 2. La cavité est réalisée par poinçonnage mais on pourrait envisager un formage par pression ou emboutissage ou autre usinage au moins partiel du substrat.

Alternativement, lorsque le motif est de type M1 on profite de la formation d'une cavité pour découper au moins une portion de départ 7 et/ou portion de fin 8 du parcours d'antenne qui se trouve dans la zone Z.

A l'étape 300 de report de module, des modules électroniques 10 sont insérés au moins en partie dans chaque cavité (26); Chaque module comporte des plages de contact disposées en regard des portions terminales (7b, 8b) de l'antenne.

A l'étape 400 de connexion, le procédé réalise la connexion des plages de contact aux portions terminales. La connexion s'effectue ici par une soudure (38) de type thermo-compression ou à ultrasons. La soudure utilise une enclume (E non représentée) qui vient exercer un appui contre l'enfoncement de la portion terminale de l'antenne dans le support. Chaque soudure forme un point de connexion sur les portions terminales de connexion et les plages de contact.

D'autres connexions sont possibles à l'aide notamment d'une colle conductrice disposée sur des zones dénudées des portions de connexion de l'antenne.

Le procédé est conforme à celui décrit dans la demande de brevet EP-2001077-A1: l'enclume transperce d'une perforation P le substrat 2 en regard de la portion terminale à connecter de manière que la portion (7b, 8b) à connecter soit supportée par l'enclume pendant la soudure.

A l'étape 500 de lamination, le procédé prévoit de de recouvrir l'une ou les deux faces opposées du substrat d'au moins une feuille 11, 12 ou couche de couverture. Le cas échéant l'une au moins des feuilles 11a, 12a ou couche de couverture comporte une ouverture 23, 24 de compensation d'épaisseur du microcircuit.

On procède ensuite à des découpes au format. Le cas échéant, la découpe au format peut s'effectuer à d'autres étapes.

## Revendications

1. Procédé de réalisation d'un dispositif comportant une antenne de transpondeur, ledit procédé comportant des étapes de :
- réalisation d'un ensemble comprenant un substrat (2) portant au moins une antenne (3), l'antenne comportant des portions terminales (7b, 8b) de connexion reposant sur le substrat à des emplacements du substrat,
**caractérisé en ce que** le substrat constitue ou comprend une masse adhésive en feuille ou ruban au contact de l'antenne.

2. Procédé selon la revendication 1, **caractérisé en ce que** le substrat présente une épaisseur inférieure à 90 µm.

3. Procédé selon l'une des revendications précédentes, **caractérisé en ce qu'**il comprend une étape de formation d'une cavité (26) à proximité des emplacements des portions terminales de connexion.

4. Procédé selon la revendication précédente, **caractérisé en ce que** l'étape de formation d'une cavité comprend la découpe d'au moins une portion de départ (7) et/ou de fin (8) d'un parcours d'antenne (3).

5. Procédé selon l'une quelconque des revendications 3 à 4, **caractérisé en ce qu'**il comprend une étape d'insertion d'un module électronique (10) au moins en partie dans la cavité (26), ledit module comportant des plages de contact (5, 6) disposées en regard de portions terminales (7b, 8b) de l'antenne.

6. Procédé selon l'une quelconque des revendications 3 à 5, **caractérisé en ce qu'**il comprend une étape de connexion des plages de contact (5, 6) correspondantes aux portions terminales (7a, 8a, 7b, 8b) après insertion dans la cavité.

7. Procédé l'une quelconque selon des revendications précédentes, **caractérisé en ce que** l'adhésif est mis en oeuvre a une température de ramollissement d'environ 90 à 110 °C.

8. Dispositif comprenant un substrat (2) portant au moins une antenne (3), l'antenne comportant des portions terminales de connexion (7a, 8a, 7b, 8b) reposant sur le substrat à des emplacements du substrat, **caractérisé en ce que** le substrat est constitué ou comprend une masse adhésive en feuille ou ruban au contact de l'antenne.

9. Dispositif selon la revendication précédente **caractérisé en ce que** le substrat présente une épaisseur inférieure à 90 µm.

10. Dispositif selon l'une quelconque des revendications 8 à 9, **caractérisé en ce que** l'antenne (3) avec ses portions terminales de connexion (7a, 8a, 7b, 8b) est réalisée par incrustation de fil dans le substrat.

11. Dispositif l'une quelconque selon des revendications 8 à 10, **caractérisé en ce qu'**il comprend :
- une cavité (26) à proximité des emplacements des portions terminales de connexion,
- un module électronique (10) disposé au moins en partie dans la cavité (26), ledit module comportant des plages de contact disposées en regard de portions terminales (7b, 8b) de l'antenne.

12. Dispositif selon la revendication précédente, **caractérisé en ce que** le fil d'antenne (3) et ses portions terminales de connexion (7a, 8a, 7b, 8b) sont noyés au moins en partie dans le substrat adhésif.

13. Dispositif selon l'une quelconque des revendication 8 à 13, **caractérisé en ce que** la masse adhésive présente des propriétés de tenue mécanique et/ou chimique suffisamment faibles pour se décomposer ou se déchirer en cas de tentative de délamination des feuilles de recouvrement notamment par attaque chimique.

14. Dispositif selon l'une quelconque des revendications 8 à 11, **caractérisé en ce qu'**il l'adhésif a une température de ramollissement d'environ 90 à 110 °C.

15. Produit électronique de communication radiofréquence, tel une carte à puce sans contact, un passeport comprenant le dispositif selon l'une des revendications 8 à 14.
